# EUROPÄISCHE PATENTANMELDUNG

(11) **EP 0 825 398 A2**
(43) Veröffentlichungstag der Anmeldung: **25.02.1998**
(21) Anmeldenummer: 97113701.3
(22) Anmeldetag: 07.08.1997
(51) Int. Cl.: F25B 27/00, F25B 9/00

(54) **Verfahren zum Betreiben einer Vorrichtung mit einer Wärmekraftmaschine**

(30) Priorität: 08.08.1996 DE 19632019
(71) Anmelder: Sturm, Thomas, 85259 Wiedenzhausen (DE)
(72) Erfinder: Sturm, Thomas, 85259 Wiedenzhausen (DE)
(74) Vertreter: Kitzhofer, Thomas, Dipl.-Ing.

(57) **Zusammenfassung**

Ein Verfahren zum Betreiben einer Vorrichtung mit einer Wärmekraftmaschine, die in ihrem geschlossenen Arbeitsmittelkreis (2) einen Energiewandler (7), einen Kühler (8), einen Verdichter (9) und einen Erhitzer (6) aufweist, benützt Kohlendioxid im überkritischen Bereich als Arbeitsmittel. Es arbeitet mit folgenden Schritten:
- das Kohlendioxid wird in dem Verdichter (9) auf einen Druck von etwa 100 bis 175 bar bei einer Austrittstemperatur von etwa 20 bis 50 °C gebracht,
- in dem anschließenden Erhitzer (6) erwärmt, wobei das Kohlendioxid durch Energie aus einem an den Arbeitmittelkreis gekoppelten zweiten Strömungskreis erwärmt wird, der durch den Kältemittelkreis (3) einer Wärmepumpe, den Arbeitsmittelkreis einer Solarheizung oder den Kühlmittelkreis eines Verbrennungsmotors gebildet wird,
- in den Energiewandler (7) zur Krafterzeugung weitergeleitet, den es mit einem Druck von 73,8 bis 100 bar verläßt, und
- in den Kühler (8) geleitet, wo es auf die Eintrittstemperatur in den Verdichter (9) abgekühlt wird.
Durch das Verfahren wird der Umwelt Wärmeenergie entzogen, die zum Betreiben einer Wärmekraftmaschine benutzt wird.

## Beschreibung

Die Erfindung betrifft ein Verfahren zum Betreiben einer Vorrichtung mit einer Wärmekraftmaschine und eine Vorrichtung zur Durchführung des Verfahrens nach den Oberbegriffen der Ansprüche 1 bzw. 11.

Es ist bekannt, Wärme aus der Umwelt durch Verwendung von Wärmekraftmaschinen in kinetische Energie umzuwandeln. Für den Betrieb derartiger Maschinen ist jedoch ein möglichst hohes Temperaturgefälle nötig, um einen guten Wirkungsgrad zu erreichen. Das zur Verfügung stehende Temperaturgefälle - der Erdoberfläche ist von Witterung, Tages- und Jahreszeit, geographischer Lage und Klimazone abhängig. Diese Faktoren beeinflußen den Wirkungsgrad und den jährlichen Nutzungsgrad einer Wärmekraftmaschine erheblich. Um ein möglichst hohes und gleichbleibendes Temperaturgefälle zu erreichen, werden deshalb z.B große Tag/Nachtspeicher eingesetzt.

Ein gattungsgemäßes Verfahren und eine gattungsgemäße Vorrichtung sind aus der US 38 75 749 in Verbindung mit einem geothermischen Kraftwerk bekannt, das naturgemäß mit einem hohen Temperaturgefälle arbeitet. Dabei dient eine mit heißem Wasser gefüllte Kammer im Erdinneren dazu, Kohlendioxid in einer die Kammer durchlaufenden Leitung stark zu erhitzen. Das sich aufgrund der Erhitzung im überkritischen Bereich befindliche Kohlendioxid wird an die Erdoberfläche geleitet, wo es in einem Energiewandler entspannt wird und kinetische Energie erzeugt. Anschließend wird das Kohlendioxid verflüssigt. Das geothermische Kraftwerk ist in seiner Errichtung sehr teuer. Es arbeitet mit der hohen Temperaturdifferenz zwischen dem Erdinneren und dem -äußeren. Das in dieser Druckschrift beschriebene Verfahren kann deshalb nicht ausschließlich - der Erdoberfläche durchgeführt werden, da hier keine ausreichende Temperaturdifferenz vorhanden ist.

Aufgabe der Erfindung ist es, ein Verfahren und eine einfach realisierbare Vorrichtung zu schaffen, mittels denen große Mengen von in der Umwelt vorhandener oder anfallender Wärmeenergie möglichst unabhängig von einem äußeren Temperaturgefälle und von klimatischen Verhältnissen in mechanische Energie umgewandelt werden können, wobei der Verbrauch fossiler Brennstoffe vermieden werden soll.

Die Aufgabe wird erfindungsgemäß durch die Merkmale der Ansprüche 1 bzw. 11 gelöst.

Beim erfindungsgemäßen Verfahren wird sich im überkritischen Bereich befindliches Kohlendioxid als Arbeitsmittel in einer Wärmekraftmaschine genutzt. Das Kohlendioxid im Arbeitsmittelkreis kann, muß aber nicht zwingend, während seines gesamten Umlaufes im überkritischen Zustand sein, wobei es in einem Verdichter auf einen sehr hohen Druck, nämlich etwa 100 bis 175 bar, gebracht wird und sich dabei lediglich auf einer Austrittstemperatur auf etwa 20 bis 60 °C befinden muß. Dank dieser niedrigen Temperatur ist es möglich, an den Arbeitsmittelkreis einen zweiten Strömungskreis zu koppeln, der durch den Kältemittelkreis einer Wärmepumpe, den Arbeitsmittelkreis einer Solarheizung oder einen Kühlmittelkreis eines Verbrennungsmotors gebildet wird. Beim Verbrennungsmotor wird dessen Abwärme, sozusagen sein Nebenprodukt, zum Betreiben eines zusätzlichen Verfahrens eines Verbrennungsmotors genutzt, so daß der Gesamtwirkungsgrad des Verbrennungsmotors gegenüber seinem herkömmlichen Betrieb gesteigert wird. Da die im Arbeitsmittelkreis für einen hohen Wirkungsgrad notwendigen Temperaturen in der Umwelt kaum vorhanden sind, wird diese durch einen an den Arbeitsmittelkreis gekoppelten Srömungskreis erzeugt. Durch die Koppelung eines Strömungskreises mit einem Arbeitsmittelkreis kann Umweltwärme oder, wie beim Verbrennungsmotor, Wärme sozusagen als 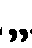 Abfallprodukt" in dem Arbeitsmittelkreis die notwendige Temperaturerhöhung herbeiführen. Durch die Wärmepumpe, eine Solarheizung oder den Kühlmittelkreis des Verbrennungsmotors wird in einem Erhitzer das Kohlendioxid nur um vorzugsweise etwa 5 bis 60 °C erwärmt. Das sich dadurch auf einem sehr hohen Energieniveau befindliche Kohlendioxid entspannt sich anschließend in einem Energiewandler, vorzugsweise einer Turbine, auf 73,8 (kritischer Druck) bis 100 bar. In einem darauffolgenden Kühler wird es auf die Eintrittstemperatur in den Verdichter abgekühlt. Die Erfindung verwendet Kohlendioxid in einem Bereich, bei dem dieses große Volumenänderungen bei geringen Temperaturänderungen durchführt. Durch das erfindungsgemäße Verfahren und die erfindungsgemäße Vorrichtung ist es möglich, ohne, aber auch mit äußerem Temperaturgefälle in kühlen geographischen Breiten kinetische Energie, beispielsweise zum Antrieb von Generatoren oder Arbeitsmaschinen zu erzeugen. Der Nutzenergiegewinn durch die Vorrichtung, die durch das erfindungsgemäße Verfahren betrieben wird, entspricht der Differenz der im Arbeitsmittelkreis gewonnen mechanischen Energie und der im Strömungskreis benötigten. Der Wirkungsgrad im Betrieb zur Erzeugung von kinetischer Energie kann, abhängig von der Umgebungstemperatur, bis zu etwa 45 % betragen, die Leistungszahl des Kältemittelkreises der vorzugsweise angekoppelten Wärmepumpe liegt, je nach Umgebungstemperatur, zwischen 3 und 6. Die gemeinsame, übergeordnete Idee der Möglichkeiten, den Strömungkreis zu betreiben (Wärmepumpe, Solarheizung, Kühlmittelkreis des Verbrennungsmotors), besteht darin, daß nur ungenutzte Wärme aus der Luft oder Wasser (Meerwasser, fließende Gewässer oder Grundwasser), aus Sonnenenergie oder aus Verbrennungsmotoren, obwohl teilweise kein äußeres Temperaturgefälle vorliegt, zur ganzjährigen Erzeugung von kinetischer Energie genutzt wird. Sich bereits im Betrieb befindliche Wärmepumpen können mit geringem Aufwand in die beschriebene Vorrichtung zur Durchführung des erfindungsgemäßen Verfahrens integriert werden.

Vorteilhalte Ausgestaltungen der Erfindung bilden die Gegenstände der Unteransprüche.

Gemäß einer bevorzugten Ausführungsform benutzt das erfindungsgemäße Verfahren vorzugsweise folgende Schritte:
das Kohlendioxid wird im Verdichter auf einen Druck von etwa 110 bis 160 bar bei einer Austrittstemperatur von etwa 25 bis 55 °C gebracht wird, im Erhitzer um etwa 5 bis 40 °C auf ca. 40 bis 65 °C erwärmt und verläßt den Energiewandler mit einem Druck von 75 bis 85 bar. Die so beschriebenen Bereiche des Kohlendioxid ermöglichen eine Umwandlung eines hohen Anteils der investierten Wärme in mechanische Energie.

Vorzugsweise nimmt der Strömungkreis Energie aus der Umwelt und aus dem Kühler des Arbeitsmittelkreises auf, so daß letztere die notwendige Wärmepumpenleistung, wenn eine Wärmepumpe eingesetzt wird, herabsetzt, was insbesondere dann vorteilhaft ist, wenn die Wärmepumpe mit aus der Wärmekraftmaschine gewonnenen Energie betrieben wird. Dies kann durch direkte Koppelung des Verdichters im Strömungskreis mit dem Energiewandler erfolgen.

Wenn überschüssige Energie im Strömungskreis zu einem Wärmespeicher geleitet wird, kann dieser als Puffer für folgende Situationen genutzt werden: bei gesteigerter Leistungsabnahme am Energiewandler kann die Energie in den Strömungskreis zurückgeführt werden. Um diese eingespeiste Energiemenge verringert sich die Energie, die der Verdichter benötigt und am Abtrieb abnimmt, so daß mehr Energie am Abtrieb zur freien Verfügung, z.B. zum Antrieb eines Generators, steht. Zum Anlaufen der Vorrichtung wird Wärme aus dem Wärmespeicher ebenfalls dem Strömungskreis zugeführt, so daß weniger externe Energie, z.B. durch einem Antriebsmotor oder eine Umwälzpumpe für den Anlaufvorgang benötigt wird.

Vorzugsweise weist der Kältemittelkreis einen Verdichter auf, über dessen Verdichterleistung die Nutzleistung der Wärmekraftmaschine gesteuert wird. Dies kann z.B. durch Änderung des Fördervolumens und/oder des Austrittsdrucks aus dem Verdichter erfolgen. Der Austrittsdruck kann über eine Veränderung des Querschnitts der stromabwärts aus ihm herausführenden Leitung gesteuert werden.

Das erfindungsgemäße Verfahren kann aber auch so betrieben werden, daß es teilweise oder ausschließlich zur Wärmeerzeugung genutzt wird. Hierzu wird die gesamte im Arbeitsmittelkreis gewonnene Energie dem Verdichter im Strömungskreis zugeführt, um die gekoppelten Kreisläufe auf Wärmeerzeugung umzustellen. Es kann notwendig sein, daß bei zusätzlich zu erbringender Heizleistung über einen Motor, der auch das Anlaufen des Verfahrens unterstützen oder ermöglichen kann, dem Verdichter im Strömungskreis kinetische Energie zur Steigerung der Heizleistung zugeführt wird.

Ferner ist es vorteilhaft, wenn die in einem Verbraucher anfallende Verlustwärme aufgefangen und dem Arbeitmittelkreis direkt oder indirekt über den Strömungskreis zugeführt wird.

Das Verfahren kann auch ausschließlich im überkritischen Bereich von Kohlendioxid durchgeführt werden, was Korrosions- und Kavitationsprobleme an Bauteilen vermeidet.

Bei der erfindungsgemäßen Vorrichtung bilden gemäß einer Ausgestaltung der Erhitzer im Arbeitsmittelkreis und der Kühler im Strömungskreis einen Wärmetauscher.

Bei sehr tiefen Umgebungstemperaturen ist es vorteilhaft, wenn die Restwärme im Arbeitsmittelkreis und die Wärme aus der Umgebung über zwei getrennte Wärmetauscher in den Strömungskreis geleitet werden. Gemäß einer bevorzugten Ausführungsform wird der Kühler im Arbeitsmittelkreis mit dem Strömungskreis strömungsmäßig verbunden, und durch den Erhitzer im Strömungskreis verläuft eine Umgebungsmedium führende Leitung.

Damit bei tieferen Temperaturen der Verdichter im Strömungskreis weniger Energie benötigt, ist er gemäß einer weiteren Ausgestaltung mehrstufig ausgebildet, wobei in eine Stufe ein vom Erhitzer kommender Abschnitt des Strömungskreises mündet und in eine anderen Stufe ein vom Kühler im Arbeitsmittelkreis kommender Abschnitt mündet. Der Verdichter benötigt deshalb weniger Energie, um das aus dem Kühler im Arbeitsmittelkreis und dem Erhitzer im Strömungskreis kommende Medium auf eine höhere Temperatur zu bringen.

Durch den Erhitzer im Strömungskreis verläuft eine Umgebungsmedium, also z.B. Luft oder Wasser, führende Leitung, die sich stromaufwärts durch den Kühler im Arbeitsmittelkreis erstreckt und Energie aus dem Arbeitsmittelkreis aufnimmt. Der Kühler im Arbeitsmittelkreis und der Erhitzer im Strömungskreis können einen Wärmetauscher bilden, wodurch in der Vorrichtung Wärmeverluste vermieden werden.

Bei der bevorzugten Ausführungsform zweigt von der vom Verdichter im Strömungskreis zum Kühler führenden Leitung eine zu einem Wärmespeicher führende Leitung ab, wobei die in den beiden Leitungen vorhandenen Strömungsmengen des Kältemittels durch ein ansteuerbares Steuerorgan, z.B. über ein Mehrwegeventil, dosierbar sind. Eine aus dem Wärmespeicher herausführende Leitung mündet stromabwärts des Kühlers des Strömungskreis in den Strömungskreis.

Wenn, wie zuvor schon im Zusammenhang mit dem erfindungsgemäßen Verfahren angesprochen, der Wärmespeicher mit einem Heizkreislauf verbunden ist, ist es vorteilhaft, daß der Verdichter im Strömungskreis über eine schaltbare Kupplung vom Abtrieb des Energiewandlers abkoppelbar ist, um die Vorrichtung als Heizung zu betreiben.

Bei der bevorzugten Ausführungsform ist ferner eine Regeleinrichtung vorgesehen, die abhängig von der geforderten mechanischen Ausgangsleistung die Verdichterleistung und/oder die dem Wärmespeicher zugeführte oder von ihm an den Strömungskreis zurückgegebene Energiemenge einstellt.

Alternativ kann das erfindungsgemäße Verfahren und die erfindungsgemäße Vorrichtung auch mit einer Solarheizung, deren Arbeitsmittelkreis den Strömungskreis bildet, anstelle der Wärmepumpe betrieben werden, so daß auch hier keine fossilen Brennstoffe zur Erzeugung von kinetischer Energie benötigt werden. Die Abwärme eines Verbrennungsmotors zu nutzen, ist eine weitere Möglichkeit, die erfindungsgemäße Vorrichtung ohne fossile Brennstoffe zu betreiben. Dies ist durch direkte Koppelung des Kühlmittelkreises eines Verbrennungsmotors mit dem Arbeitsmittelkreis oder durch Vorsehen eines weiteren Strömungskreises verwirklichbar. In letzterem Fall wird der Kühlmittelkreis eines Verbrennungsmotors an den mit dem Arbeitsmittelkreis verbundenen Strömungskreis gekoppelt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Fig. 1 eine erste Ausführungsform der durch das erfindungsgemäße Verfahren betriebenen Vorrichtung, mit einer Wärmekraftmaschine und daran gekoppelter Wärmepumpe,
- Fig. 2 eine zweite Ausführungsform der erfindungsgemäßen Vorrichtung, die als Schiffsantrieb eingesetzt wird und Wasser als Energielieferant benutzt,
- Fig. 3 ein Energieflußdiagramm, das den Energieverlauf in der Vorichtung nach Fig. 1 beim Erzeugen von kinetischer Energie wiedergibt,
- Fig. 4 ein Energieflußdiagramm, das den Energieverlauf in der Vorichtung nach Fig. 1 beim Erzeugen von Wärmeenergie wiedergibt,
- Fig. 5 ein p-V-Diagramm für eine bevorzugte Ausführungsform des erfindungsgemäßen Verfahrens, das die Abläufe im Arbeitsmittelkreis zeigt, und
- Fig. 6 eine gegenüber der ersten Ausführungsform geringfügig geänderte, dritte Ausführungsform.

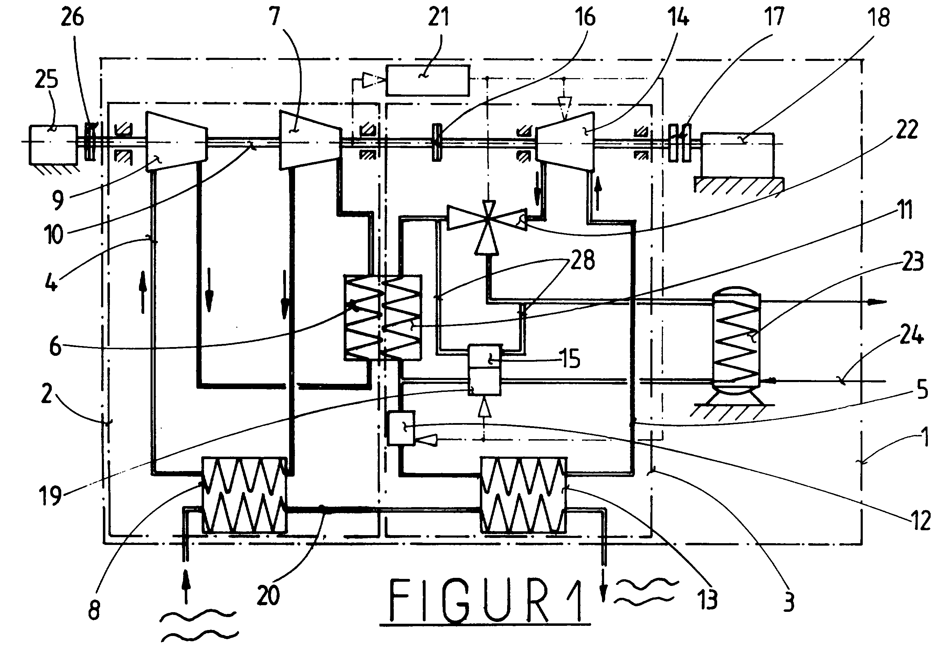

In Fig. 1 ist eine Vorrichtung zum Umwandeln von Wärmeenergie eines fließenden Gewässers in kinetische Energie mit 1 bezeichnet. Die Vorrichtung 1 weist einen Albeitsmittelkreis 2 und einen Strömungskreis in Form eines Kältemittelkreises 3 auf, die miteinander gekoppelt sind. Der Arbeitsmittelkreis 2 wird durch eine Wärmekraftmaschine und der Kältemittelkreis 3 durch eine Warmepumpe gebildet. Im Arbeitsmittelkreis 2 und im Kältemittelkreis 3 durchlaufen Kohlendioxid bzw. Kältemittel jeweils einen Kreisprozeß. Der Arbeitsmittelkreis 2 umfaßt in Strömungsrichtung der Reihenfolge nach folgende, durch Leitungen verbundene Komponenten, nämlich einen Erhitzer 6, einen Energiewandler 7 in Form einer Turbine, einen Kühler 8 und einen Verdichter 9. Der Energiewandler 7 weist einen Abtrieb 10 in Form einer Abtriebswelle auf, auf der auch der sich drehende Teil des Verdichters 9 sitzt.

Eine kostengünstige Möglichkeit, den Energiewandler 7 und den Verdichter 9 zu realisieren, besteht im Vorsehen von einem oder mehreren ventilgesteuerten Zylindern, z.B. zwei Hydraulikzylindern, welche über entsprechende Ein- und Auslaßventile gesteuert werden. Der Verdichter ist durch den kolbenstangenseitigen Arbeitsraum in einem Zylinder und der Energiewandler durch den kolbenbodenseitigen Arbeitsraum des oder eines anderen Zylinders gebildet. Beispielsweise können zwei Hydraulikzylinder vorgesehen sein, wobei ein Zylinder dem Verdichter 9 und der andere dem Energiewandler 7 zugeordnet ist. Die Kolben beider Zylinder können über eine Kolbenstange miteinander verbunden sein. Die Kolbenstange wiederum ist zweigeteilt und an ihrer Teilungsstelle über eine Kupplung in Form einer Kurvenrolle mit Kulisse verbunden.

Der Kältemittelkreis 3 umfaßt einen Kühler 11, der mit dem Erhitzer 6 zu einem Wärmetauscher zusammengefaßt ist. In Strömungsrichtung der Reihenfolge nach schließen sich an den Kühler 11 eine Entspannungsdüse 12 mit veränderlichem Strömungsquerschnitt, ein Erhitzer 13 und ein Verdichter 14 an. Der Verdichter 14 ist mit der Abtriebswelle 10 wahlweise koppelbar, indem eine schaltbare, zwischen dem Energiewandler 7 und dem Verdichter 14 angeordnete Kupplung 16 entsprechend betätigt wird. Vom Verdichter 14 führt die Abtriebswelle 10 über eine weitere schaltbare Kupplung 17 zu einem Antriebsmotor 18.

Der Kühler 8 und der Erhitzer 13 sind durch eine jeweils durch sie hindurchführende Leitung 20 miteinander verbunden. Die Leitung 20 ragt dabei in ein Gewässer und führt Wasser durch den Kühler 8 und anschließend durch den Erhitzer 13, bis das Wasser wieder in das Gewässer, das mit Wellenlinien symbolisiert ist, zurückfließt.

Zwischen dem Verdichter 14 und dem Kühler 11 ist ein über eine Regeleinrichtung 21 steuerbares Mehrwegeventil 22 vorgesehen, von dem aus eine Leitung zu einem Wärmespeicher 23 und von diesem wiederum eine durch ein Absperrorgan 19 schließbare Leitung zu derjenigen Leitung führt, die den Kühler 11 mit der Entspannungsdüse 12 verbindet. Eine Umgehungsleitung 28 zweigt von der Leitung ab, die vom Mehrwegeventil 22 zum Wärmespeicher 23 führt. In der Umgehungsleitung 28 ist eine Umwälzpumpe 15 angeordnet. Die Umgehungsleitung 28 mündet stomabwärts des Mehrwegeventils 22 in den Kältemittelkreis. Ein durch den Wärmespeicher 23 hindurchführender Heizkreis 24 dient zum Erwärmen eines Hauses, in dem die Vorrichtung 1 integriert ist.

Die Regeleinrichtung 21 ist nicht nur mit dem Mehrwegeventil 22, sondern auch mit dem Verdichter 14, der Entspannungsdüse 12, dem Absperrorgan 19, der Umwälzpumpe 15 und der Abtriebswelle 10 verbunden. Ein Stromgenerator 25 ist durch die Abtriebswelle 10 antreibbar, wenn eine entsprechende Kupplung 26 zwischen dem Generator 25 und dem Verdichter 9 eingekuppelt ist.

Die gezeigte Vorrichtung 1 dient zur Strom- und/oder Wärmeerzeugung in einem Haus und arbeitet nach folgendem Verfahren: Im Arbeitsmittelkreis wird Kohlendioxid im Verdichter 9 auf einen Druck von etwa 110 bis 160 bar bei einer Austrittstemperatur aus dem Verdichter 9 von etwa 25 bis 55 °C gebracht. In dem anschließenden Erhitzer 6 wird dem Kohlendioxid aus dem Kaltemittelkreis Wärme zugeführt, so daß es um etwa 5 bis 40 °C möglichst auf ca. 50 bis 70 °C erwärmt wird, wobei dies von der Leistungsfähigkeit der den Kältemittelkreis bildenden Wärmepumpe und der Wassertemperatur abhängig ist. Das so auf ein hohes Energieniveau gebrachte Kohlendioxid strömt durch den Energiewandler 7, der einen Teil der Wärmeenergie in kinetische Energie umwandelt und damit den Verdichter 9 sowie, bei Stromerzeugung, den Generator 25 und den Verdichter 14 im Kältemittelkreis antreibt. Beim Ausströmen aus dem Energiewandler hat das Kohlendioxid lediglich einen Druck von 75 bis 85 bar. Im Kühler 8 wird das etwa 35 °C wie Kohlendioxid auf etwa 31 °C abgekühlt. Dadurch wird das durch den Kühler 8 strömende Wasser erwärmt.

Der Erhitzer 13 entzieht dem erwärmten Wasser mehr als die vom Kühler 8 zugeführte Wärmemenge. Durch den anschließenden Verdichter 14 wird das erwärmte Kältemittel auf ein höheres Temperaturniveau gebracht, das bei modernen Wärmepumpen bei ca. 60 °C liegt. Im Normalbetrieb ist das Mehrwegeventil 22 so geschaltet, daß die Leitung zum Wärmespeicher 23 hin geschlossen ist und das gesamte erwärmte Kältemittel in den Kühler 11 strömt, wo es einen Großteil seiner Wärmeenergie an das Kohlendioxid, also an den Arbeitsmittelkreis abgibt, bevor es in der Düse 12 entspannt wird und damit weiter abkühlt, bis es wieder in den Erhitzer 13 gelangt.

Die Regeleihrichtung 21 erfaßt durch Sensoren, z.B. einen Drehzahlsensor an der Abtriebswelle 10, Lastschwankungen. Diese werden beispielsweise durch erhöhte Energieabnahme am Generator 25 verursacht. Damit kann die Vorrichtung 1 auf die Änderung von Lastzuständen reagieren.

Bei Normallast ist die an den Verdichter 14 des Kältemittelkreises abgegebene kinetische Energie so groß, daß die vom Kältemittelkreis an den Arbeitsmittelkreis abgegebene Warmeenergie, ohne Abgabe oder Aufnahme von Wärmeenergie an oder vom Wärmespeicher 23 sowie ohne Antrieb durch den Motor 18, ausreicht, damit die Vorrichtung 1 die gefordertete Nutzleistung erbringt.

Bei Lastabnahme kann der Verdichter 10 mehr kinetische Energie erhalten. Die Regeleinrichtung 21 erhöht deshalb die Verdichterleistung, was durch Änderung des Fördervolumens oder des Austrittsdrucks aus dem Verdichter 14 erfolgt. Hierzu kann die Entspannungsdüse 12 durch die Regeleinrichtung 21 entsprechend angesteuert werden, so daß ihr Strömungsquerschnitt erniedrigt wird. Die zusätzlich gewonnene Energiemenge wird durch Öffnung der zum Wärmespeicher 23 führenden Leitung an den Wärmespeicher 23 abgegeben. Der Wärmespeicher 23 gibt, wenn dies die Haustemperatur erforderlich macht, seine Wärme unmittelbar an den Heizkreis 24 ab. Ferner kann die Warmeenergie im Wärmespeicher 23 längere Zeit gespeichert bleiben. Abgekühltes Kältemittel strömt schließlich in den Kältemittelkreis zurück.
Bei Lastzunahme strömt die sich im Wärmespeicher 23 befindliche Wärmemenge über die Umgehungsleitung bei Unterstützuung durch die Umwälzpumpe 15 zurück in den Kältemittelkreis 3, so daß die aufgrund der dann zu reduzierenden Verdichterleistung fehlende Energie kompensiert wird und stets die gleiche Energiemenge zu dem Erhitzer 6 gelangt, so daß der Energiewandler 7 und der Verdichter 9 stets in ihrem optimalen Betriebsbereich arbeiten. Extreme Leistungsspitzen können gegebenenfalls durch Starten des Motors 18, der den Verdichter 14 dann unterstützt, aufgefangen werden.

Neben der Erzeugung von Strom und Wärme bei Lastabnahme ist es auch möglich, die Vorrichtung 1 ausschließlich auf Wärmeerzeugung umzustellen. Hierzu wird die Kupplung 26 entsprechend betätigt, damit der Generator 25 keinen Strom mehr erzeugt. Die gesamte erzeugte kinetische Energie wird dem Verdichter 14 zugeführt. Ein Teil der der Umwelt, vorliegend der dem Gewässer, entzogenen Energiemenge dient zum Antrieb der Vorrichtung 1, der andere Teil wird dem Wärmespeicher 23 zugeführt, wobei durch Einkuppeln des Motors 18 auf Schließen der Kupplung 17 hin der Verdichter 14 durch den Motor 18 antreibbar ist.

Der Motor 18 kann auch zum Starten der Vorrichtung 1 dienen, die jedoch nach Erreichen des Normallast-Betriebszustandes auch ohne Motor 18 selbsttätig läuft. Im Normalfall jedoch erfolgt das Starten durch ein Zuführen der gespeicherten Wärmeenergie aus dem Energiespeicher 23 mittels der Umwälzpumpe 15 zum Kühler 11. Dabei ist die Kupplung 16 so geschaltet, daß der Verdichter 14 nicht mitlauft, das Absperrorgan 19 ist geöffnet und das Mehrwegeventil 22 und die Entspannungsdüse 12 geschlossen. Nach dem Anlaufen wird das Absperrorgan 19 geschlossen, die Entspannungsdüse12 und das Mehrwegeventil 22 entsprechend geöffnet, die Umwälzpumpe 15 ausgeschaltet und die Kupplung 16 eingekuppelt.

Das sich nach dem Erhitzen im überkritischen Bereich befindliche Kohlendioxid kann nach dem Kühler 8 in den unterkritischen Bereich überführt sein, was die Leistung der Vorrichtung 1 nicht wesentlich verringert.

Die beschriebene Vorrichtung 1 produziert zwar mehr Energie, wenn ein äußeres Temperturgefälle vorhanden ist, das Vorhandensein eines äußeren Temperaturgefälles ist aber nicht zwingend erforderlich, da die Wärmepumpe mit ihrem Kältemittelkreis das Kältemittel durch Entziehen von Wärmeenergie aus der Umgebung auf eine höhere Temperatur als die Eintrittstemperatur des Kohlendioxids in den Erhitzer 6 bringt.

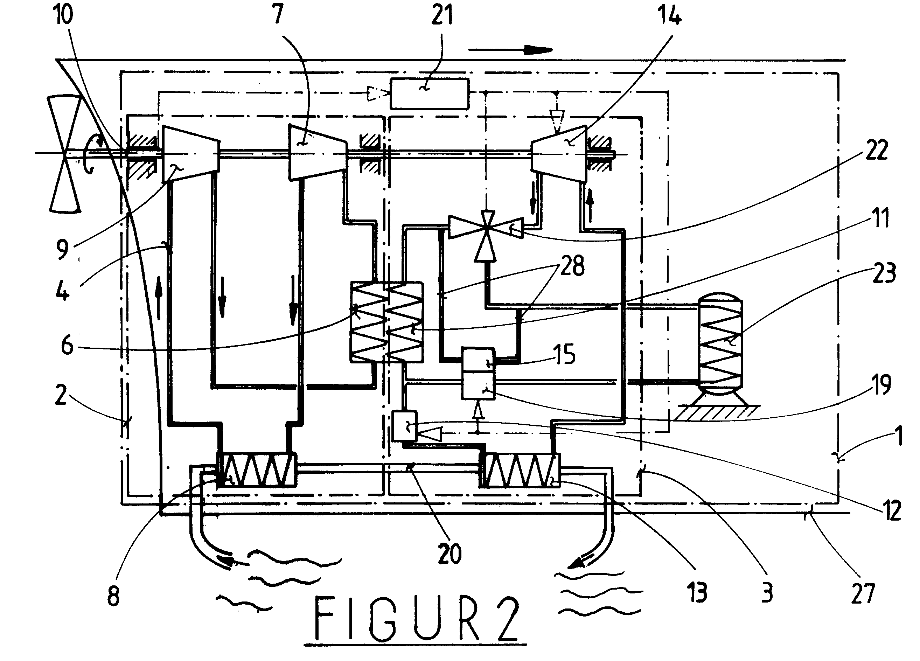

Die Vorrichtung 1 kann zum Antrieb von Generatoren, Pumpen und Arbeitsmaschinen dienen. In Fig. 2 ist die Vorrichtung 1 als Schiffsantrieb eingesetzt. Einander entsprechende Teile der Vorrichtungen 1 gemäß den Figuren 1 und 2 tragen dabei gleiche Bezugszeichen. Bei der in Fig. 2 gezeigten Ausführungsform strömt das das Schiff 27 umgebende Wasser durch den Kühler 8 und den Erhitzer 13. Ferner ist die Kupplung 26 entfallen, ebenso wie der Heizkreis 24, an dessen Steile alternativ der Kühlmittelkreis eines Verbrennungsmotors treten kann.

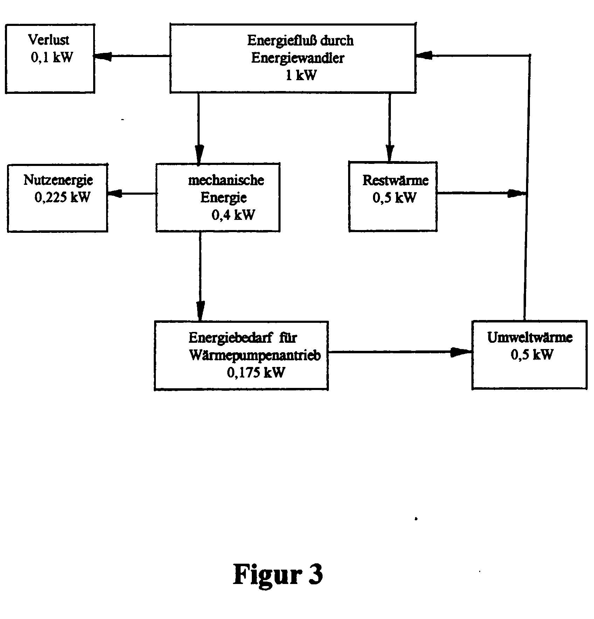

Bei dem in Fig. 3 gezeigten Energieflußdiagramm für die Vorrichtung 1 beim Betrieb mit Normallast wurde ein Wirkungsgrad von 40 % im Arbeitsmittelkreis und eine Leistungszahl von etwa 5 der Wärmepumpe angenommen. Bei 1 kW Energie, dasdem Energiewandler 7 zugeführt wird, können 0,4 kW, d.h. 40 % kinetische Energie gewonnen werden. 0,1 kW geht als Verlust in die Umwelt. Die Restwärme von 0,5 kW bleibt im Arbeitsmittelkreis. Etwa 0,175 kW der erhaltenen kinetischen Energie wird für den Antrieb der Wärmepumpe verwendet, die übrigen 0,225 kW stehen als Nutzenergie zur Verfügung. Mit den 0,175 kW kinetischer Energie entnimmt die Wärmepumpe der Umwelt 0,5 kW Wärmemenge, die notwendig sind, um dem Energiewandler 7 wieder 1 kW Ausgangsenergie zuzuführen.

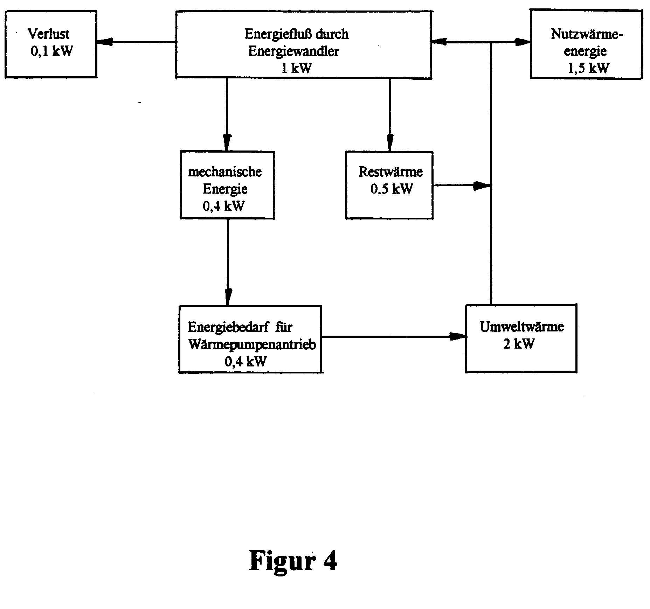

Das in Fig. 4 gezeigte Energieflußdiagramm verdeutlicht die Abläufe, wenn die Vorrichtung 1 im Heizbetrieb arbeitet und ausschließlich Nutzwärmeenergie erzeugt. Bei einer Ausgangsenergiemenge von 1 kW wird die gesamte kinetische Energie von 0,4 kW für den Wärmepumpenantrieb verwendet. Damit lassen sich 2 kW Energie der Umwelt entziehen, wovon jedoch nur 0,5 kW für den Betrieb des Energiewandlers notwendig sind, da die Restwärme von 0,5 kW noch im Arbeitsmittelkreis enthalten ist. Die verbleibende Energiemenge, nämlich 1,5 kW kann zum Heizen als Nutzwärmeenergie verwendet werden.

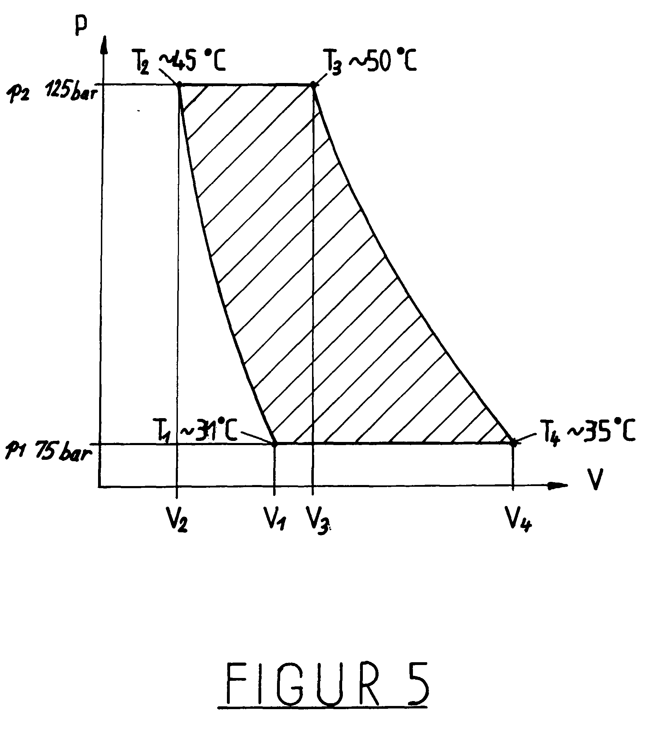

In dem in Fig. 5 gezeigten p-V-Diagramm sind die Abläufe im Arbeitsmittelkreis bei einem Umlauf und einer Ausführungsform dargestellt. Das Kohlendioxid besitzt nach dem Kühler 8 ein Volumen V₁, bei einem Druck p₁ von 75 bar und einer Temperatur von T₁ von etwa 31 °C. Im Verdichter 9 erfolgt idealerweise eine isentrope Verdichtung auf das Volumen V₂, bei einem Druck p₂ von 125 bar und einer Temperatur T₂ von etwa 45 °C. Eine isobare Erwärmung im Erhitzer 6 bringt das Kohlendioxid auf eine Temperatur T₃ von etwa 50 °C und auf ein Volumen V₃. Im Energiewandler 7 erfolgt idealerweise eine isentrope Entspannung bis zu einem Volumen V₄, einer Temperatur T₄ von etwa 35 °C und dem Ausgangsdruck p₁ von 75 bar. Die isobare Wärmeabführ im Kühler 8 bringt das Kohlendioxid wieder in den Ausgangszustand.

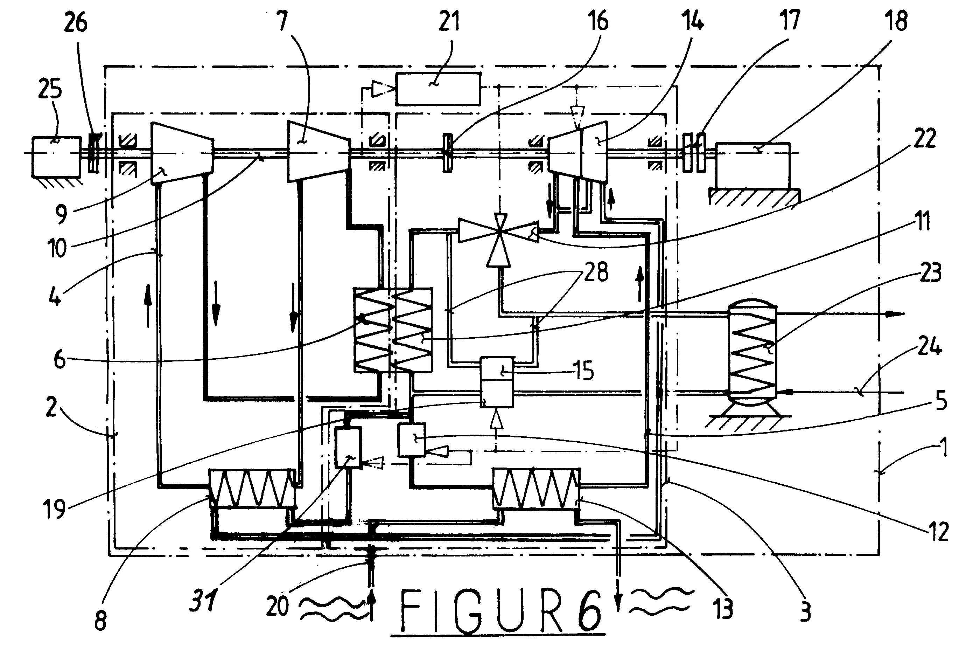

Die in Fig. 6 gezeigte Ausführungsform ist insbesondere bei sehr niedrigen Umgebungstemperaturen vorteilhaft. Sie unterscheidet sich von der in Fig. 1 gezeigten Ausführungform dadurch daß der Kühler 8 im Arbeitsmittelkreis 2 nicht unmittelbar mit dem Erhitzer 13 im Strömungskreis verbunden ist, wie dies durch die Leitung 20 bei der ersten Ausführungsform der Fall war. Der Kühler 8 ist vielmehr mit dem Strömungskreis strömungsmäßig verbunden und nicht mit einer Umgebungsmedium führenden Leitung. Die Umgebungsmedium führende Leitung 20 durchläuft bei dieser dritten Ausführungsform nur den Erhitzer 13. Der Verdichter 14 ist in dieser Ausführungsform zweistufig ausgeführt. Nach dem Kühler 11 teilt sich der Kühlmittelstrom in zwei Teilströme. Der erste Teilstrom fließt durch eine Entspannungsdüse 31 zum Kühler 8 und von diesem zur ersten Stufe des Verdichters. Der zweite Teilstrom fließt über die Entspannungsdüse 12 zum Erhitzer 13, wo das Kältemittel erwärmt wird, bevor es in die zweite Stufe des Verdichters 14 gelangt. Der Vorteil dieser Ausführungsform besteht darin, daß der Verdichter 14 sehr wenig Energie benötigt, um das Kühl oder Kältemittel der Teilströme aufeine Temperatur T₃ zu erwärmen.

Anstelle von Kohlendioxid ist es auch denkbar, ein anderes Gasgemisch oder Medium zu verwenden, dessen Volumen sich in einem bestimmten Bereich trotz geringer Temperaturänderungen sehr stark ändert.

## Patentansprüche

1. Verfahren zum Betreiben einer Vorrichtung mit einer Wärmekraftmaschine, die in ihrem geschlossenen Arbeitsmittelkreis (2) einen Energiewandler (7), einen Kühler (8), einen Verdichter (9) und einen Erhitzer (6) aufweist, wobei als Arbeitsmittel Kohlendioxid im überkritischen Bereich eingesetzt wird,
gekennzeichnet durch folgende Schritte:
- das Kohlendioxid wird in dem Verdichter (9) aufeinen Druck von etwa 100 bis 175 bar bei einer Austrittstemperatur von etwa 20 bis 60 °C gebracht,
- in dem anschließenden Erhitzer (6) erwärmt, wobei das Kohlendioxid durch Energie aus einem an den Arbeitmitteilkreis gekoppelten zweiten Strömungskreis erwärmt wird, der durch den Kältemittelkreis (3) einer Wärmepumpe, den Arbeitsmittelkreis einer Solarheizung oder den Kühlmittelkreis eines Verbrennungsmotors gebildet wird,
- in den Energiewandler (7) zur Krafterzeugung weitergeleitet, den es mit einem Druck von 73,8 bis 100 bar verläßt, und
- in den Kühler (8) geleitet, wo es auf die Eintrittstemperatur in den Verdichter (9) abgekühlt wird.

2. Verfahren nach Anspruch 1, dadurch gekennzeichnet, daß das Kohlendioxid im Erhitzer (6) um etwa 5 bis 60 °C erwärmt wird.

3. Verfahren nach Anspruch 1 oder 2, dadurch gekennzeichnet, daß das Kohlendioxid im Verdichter (9) auf einen Druck von etwa 110 bis 160 bar bei einer Austrittstemperatur von etwa 25 bis 55 °C gebracht wird, es im Erhitzer (6) um etwa 5 bis 40°C erwärmt wird und anschließend den Energiewandler (7) mit einem Druck von 75 bis 85 bar verläßt.

4. Verfahren nach einem der Ansprüche 1 bis 3, dadurch gekennzeichnet, daß der zweite Strömungskreis Energie aus der Umwelt und/oder aus dem Kühler (8) des Arbeitsmittelkreises (2) aufnimmt.

5. Verfahren nach einem der Ansprüche 1 bis 4, dadurch gekennzeichnet, daß überschüssige Energie im Strömungskreis zu einem Wärmespeicher (23) geleitet wird und diese Energie bei gesteigerter Leistungsabnahme an der Wärmekraftmaschine (7) oder bei deren Anlaufen zumindest teilweise dem Arbeitsmittelkreis (2) zugeführt wird.

6. Verfahren nach einem der Ansprüche 1 bis 5, dadurch gekennzeichnet, daß der Strömungskreis einen Verdichter (14) aufweist, der durch die aus dem Energiewandler gewonnen Energie betrieben wird.

7. Verfahren nach Anspruch 6, dadurch gekennzeichnet, daß die Nutzleistung der Wärmekraftmaschine durch Veränderung der Leistung des Verdichters (14) im Strömungskreis gesteuert wird.

8. Verfahren nach Anspruch 7, dadurch gekennzeichnet, daß die gesamte im Arbeitsmittelkreis (2) gewonnene Energie dem Verdichter (14) im Strömungskreis zugeführt wird, um die gekoppelten Kreisläufe auf Wärmeerzeugung umzustellen und daß bei zusätzlich zu erbringender Heizleistung dem Verdichter (14) im Strömungskreis über einen Motor (18) kinetische Energie zur Steigerung der Leistung des Verdichters (14) zugeführt wird.

9. Verfahren nach einem der Ansprüche 1 bis 8, dadurch gekennzeichnet, daß die in einem Verbraucher anfallende Verlustwärme aufgefangen und dem Arbeitmittelkreis direkt oder indirekt über den Strömungskreis zugeführt wird.

10. Verfahren nach einem der Ansprüche 1 bis 9, dadurch gekennzeichnet, daß das Verfahren ausschließlich im überkritischen Bereich von Kohlendioxid durchgeführt wird.

11. Vorrichtung zur Durchführung des Verfahrens nach einem der Ansprüche 1 bis 10, mit einer Wärmekraftmaschine mit einem Arbeitmittelkreis (2), der nacheinander aufweist:
einen Energiewandler (7) mit einem Abtrieb (10) zum Antreiben eines Verbrauchers,
einen Kühler (8),
einen Verdichter (9),
einen Erhitzer (6), der aus der Umwelt gewonne Wärmeenergie aufnimmt,
dadurch gekennzeichnet, daß der Erhitzer (6) im Arbeitsmittelkreis (2) an einen durch den Kältemittelkreis einer Wärmepumpe, den Arbeitsmittelkreis einer Solarheizung oder den Kühlmittelkreislauf eines Verbrennungsmotors gebildeten Strömungskreis gekoppelt ist.

12. Vorrichtung nach Anspruch 11, dadurch gekennzeichnet, daß der Erhitzer (6) im Arbeitsmittelkreis (2) und der Kühler (11) im Strömungskreis einen Wärmetauscher bilden.

13. Vorrichtung nach Anspruch 11 oder 12, dadurch gekennzeichnet, daß im Strömungskreis nach dem Kühler (11) eine Entspannungsdüse (12) vorgesehen ist.

14. Vorrichtung nach einem der Ansprüche 10 bis 13, dadurch gekennzeichnet, daß der Kühler (8) im Arbeitsmittelkreis (2) und der Erhitzer (13) im Strömungskreis einen Wärmetauscher bilden.

15. Vorrichtung nach einem der Ansprüche 11 bis 13, dadurch gekennzeichnet, daß der Kühler (8) im Arbeitsmittelkreis (2) mit dem Strömungskreis strömungsmäßig verbunden ist und daß durch den Erhitzer (13) im Strömungskreis eine Umgebungsmedium führende Leitung (20) verläuft.

16. Vorrichtung nach Anspruch 15, dadurch gekennzeichnet, daß der Verdichter (14) im Strömungskreis mehrstufig ausgebildet ist, wobei in eine Stufe ein vom Erhitzer (13) kommender Abschnitt des Strömungskreises mündet und in eine anderen Stufe ein vom Kühler (8) im Arbeitsmittelkreis (2) kommender Abschnitt mündet.

17. Vorrichtung nach einem der Ansprüche 11 bis 14, dadurch gekennzeichnet, daß durch den Erhitzer (13) im Strömungskreis eine Umgebungsmedium führende Leitung (20) verläuft, die stromaufwärts durch den Kühler (8) im Arbeitsmittelkreis (2) führt und Energie aus dem Arbeitsmittelkreis (2) aufnimmt.

18. Vorrichtung nach einem der Ansprüche 10 bis 17, dadurch gekennzeichnet, daß von der vom Verdichter (14) im Strömungskreis zum Kühler (11) führenden Leitung eine zu einem Wärmespeicher (23) führende Leitung abzweigt, wobei die zu den Leitungen führende Strömungsmenge des Kälte- oder Kühlmittels durch ein ansteuerbares Steuerorgan dosierbar ist.

19. Vorrichtung nach Anspruch 18, daduch gekennzeichnet, daß eine aus dem Wärmespeicher (23) herausführende Leitung stromabwärts des Kühlers (11) des Strömungskreises in den Strömungskreis mündet.

20. Vorrichtung nach Anspruch 18 oder 19, dadurch gekennzeichnet, daß der Wärmespeicher (23) mit einem Heizkreislauf (24) verbunden ist.

21. Vorrichtung nach einem der Ansprüche 10 bis 20, dadurch gekennzeichnet, daß der Verdichter (14) des Strömungskreises mit dem Abtrieb (10) des Energiewandlers (7) gekoppelt ist und seine Verdichterleistung veränderbar ist.

22. Vorrichtung nach einem der Ansprüche 11 bis 21, dadurch gekennzeichnet, daß eine Regeleinrichtung (21) vorgesehen ist, die abhängig von der geforderten mechanischen Ausgangsleistung die Verdichterleistung und/oder über die dem Wärmespeicher (23) zugeführte oder von ihm an den Strömungskreis zurückgegebene Energiemenge steuert.

23. Vorrichtung nach einem der Ansprüche 11 bis 22, dadurch gekennzeichnet, daß der Verdichter (14) im Strömungskreis über eine schaltbare Kupplung (16) von dem Abtrieb (10) abkoppelbar ist, um die Vorrichtung als Heizung zu betreiben.

24. Vorrichtung nach Anspruch 23, dadurch gekennzeichnet, daß an den Verdichter (14) im Strömungskreis über eine schaltbare Kupplung (17) ein Antriebsmotor (18) koppelbar ist, um die Heizleistung der Vorrichtung zu steigern oder die Wärmepumpe und damit die gesamte Vorrichtung in der Anlaufphase anzutreiben.
